# EUROPÄISCHE PATENTSCHRIFT

(11) **EP 0 824 201 B1**
(45) Veröffentlichungstag und Bekanntmachung des Hinweises auf die Patenterteilung: **05.12.2001**
(21) Anmeldenummer: 97110958.2
(22) Anmeldetag: 02.07.1997
(51) Int. Cl.: F16C 13/02

(54) **Walze mit Lagerabdichtung**
Drum with sealings of bearings
Tambour avec étanchéité pour palier

(30) Priorität: 17.07.1996 DE 19628731
(43) Veröffentlichungstag der Anmeldung: 18.02.1998
(73) Patentinhaber: SMS Demag AG, 40237 Düsseldorf (DE)
(72) Erfinder: Roeingh, Konrad, 57271 Hilchenbach (DE); Hahne, Matthias, Dr., 57072 Siegen (DE); Müller, Karl-Friedrich, 57339 Erndtebrück (DE)
(74) Vertreter: Valentin, Ekkehard, Dipl.-Ing.

(56) Entgegenhaltungen:
- DE-A- 2 130 586
- FR-A- 1 249 238
- US-A- 4 691 421
- US-A- 4 790 673

## Beschreibung

Die Erfindung betrifft eine Walze mit Lagerabdichtungen, auf deren Walzenzapfen Zapfenbuchsen hoher Festigkeit vorzugsweise aufgeschrumpft sind und bei der Schenkel profilierter Dichtringe die den Walzenballen-Stirnflächen zugewandten Endabschnitte der Zapfenbuchsen sowie mindestens Bereiche der Walzenballen-Stirnflächen dichtend übergreifen.

Um die Spannungsbereiche einer Walze, welche zwischen den von den Lagern getragenen Walzenzapfen und den Stirnflächen der Walzenkörper liegen frei von aggressiven Walzmedien aber auch weitestgehend frei von aus dem Lager austretenden Öl zu halten, sind bereits Dichtungen vorgeschlagen worden, die sowohl die Zapfenbuchsen der Lager als auch Stirnflächen der Walzenkörper dichtend übergreifen.

Die US-PS 4 790 673 offenbart z. B. auf Ansätzen der Zapfenbuchsen aufgeschrumpfte Dichtringe, welche ggfs. mittels Dichtungselementen gegen die Stirnflächen der Walzenballen vorgespannt sind. Nachteilig bei diesen Dichtringen ist, daß bei durch die Walzkraft bewirkten relativen Biegungen zwischen den Walzenzapfen und dem Walzenkörper die Dichtringe diese Biegungen zumindest im Bereich ihrer Kontaktflächen zur Walzenballen-Stirnfläche nicht mit vollziehen, so daß Spalte entstehen können, über welche aggressives Walzmedium in den Spannungsbereich der Walze gelangen kann.

Da beim Aufschrumpfvorgang der Dichtringe auf die Ansätze der Zapfenbuchsen die Dichtringe ihre Abmessungen nicht nur in radialer Richtung verändern, sondern auch in axialer Richtung schrumpfen, können schon beim Einbau der Dichtringe durchaus Mikrospalte zwischen den Stirnflächen der Walzenballen und den an diesen anliegenden Dichtring-Schenkeln entstehen, durch welche das aggressive Walzmedium leicht in den Spannungsbereich der Walzenzapfen gelangen kann.

Durch das Aufschrumpfen der Dichtringe auf Bereiche der Zapfenbuchsen werden diese Zapfenbuchsenbereiche gegen die Walzenzapfen bzw. die Spannungsbereiche der Walze gepreßt. Durch die oben geschilderte relative Biegung und diesen Anpreßvorgang kann es im Spannungsbereich der Walze zu hohen Beanspruchungen zwischen der Walze und den unter Vorspannung stehenden Zapfenbuchsen kommen, so daß Pitting-Bildungen nicht auszuschließen sind.

Um diesen Nachteil zu beseitigen wurde bereits vorgeschlagen, die den Stirnflächen der Walzenballen gegenüberstehenden Dichtring-Schenkel mit den Stirnflächen zu verschrauben. Dabei hat es sich jedoch gezeigt, daß die auf der einen Seite aufgeschrumpften und auf der anderen Seite angeschraubten Dichtringe, die oben geschilderten Biegungen im Spannungsbereich der Walzenzapfen nicht mitvollziehen. Unter den dadurch in den Dichtringen entstehenden Spannungen haben sich die Schrauben gelängt und Schraubenköpfe wurden teilweise abgerissen bzw. abgeschert.

Der Erfindung liegt die Aufgabe zugrunde, eine Walze mit Lagerdichtungen so weiterzubilden, daß die Dichtringe die Walzenspannungsbereiche auch während des Walzbetriebes und der dabei auftretenden Biegungen optimal abdichten und zudem eine hohe Standzeit aufweisen.

Zur Lösung dieser Aufgabe wird vorgeschlagen, daß die die Walzenballen-Stirnflächen übergreifenden Schenkel der profilierten Dichtringe mit den Stirnflächen des Walzenkörpers verbunden sind und daß die die Endbereiche der Zapfenbuchsen übergreifenden Schenkel der profilierten Dichtringe diese unter Einhaltung von schmalen Spalten umschließen, die jeweils durch mindestens eine Dichtungsvorrichtung abgedichtet sind.

Die feste Verschraubung gewährleistet, daß kein aggressives Walzmedium in den Spannungsbereich der Walze gelangen kann. Durch die Verschraubung nach Anspruch 2 ist ein rund um die Walze fester Sitz der Schenkel der profilierten Dichtringe an den Walzenballen-Stirnflächen gewährleistet. Die zylinderförmigen Versteifungszungen nach Anspruch 12 tragen noch dazu bei, daß auch die Zwischenräume zwischen den einzelnen Schraubverbindungen fest an den Walzenballen-Stirnflächen anliegen, ohne daß sich in diesen Bereichen der Schenkel Verwerfungen ergeben, so daß mit Sicherheit kein aggressives Walzmedium in die Spannungsbereiche der Walze gelangen kann. Die zylinderförmigen Versteifungszungen bewirken, daß die Schenkel plan an den Walzenballen-Stirnflächen anliegen und so versteift sind, daß sie auch bei fester Verschraubung ihre Planparallelität zu den Walzenballen-Stirnflächen nicht verlieren. Zusätzliche Dichtelemente zwischen den profilierten Dichtringen und den Walzenballen-Stirnflächen erhöhen die Dichtwirkung bei Schraubverbindungen.

Anstelle der Schraubverbindung können die Schenkel der profilierten Dichtringe auf die Walzenballen-Stirnflächen aufgeschrumpft sein.

Über die Verschraubungen bzw. die Schrumpfverbindungen werden die profilierten Dichtringe gehalten. Die zweiten Schenkel der profilierten Dichtringe sind dagegen nicht auf der Zapfenbuchse festgelegt, so daß es zu keinen Spannungen in den profilierten Dichtringen kommen kann. Die Dichtungsvorrichtungen zwischen den zweiten Schenkeln der profilierten Dichtringe und den Zapfenbuchsen gewährleisten einerseits, daß kein Öl aus den Lagerbereichen in die Spannungsbereiche der Walze gelangen kann und gewähren andererseits, daß sich ergebende Dehnungen bzw. Verschiebungen zwischen den profilierten Dichtringen und den Zapfenbuchsen ausgeglichen werden können.

Zwischen den zweiten Schenkeln der profilierten Dichtringe und den von ihnen übergriffenen Zapfenbuchsen werden möglichst schmale Spalte ausgebildet, welche die Wirkung von Drosseln haben, die die Öldrücke zu den Dichtungsvorrichtungen hin verringern. Die weiteren Dichtungsvorrichtungen die als Nute oder als Absätze des Spaltes ausgebildet sein können, bewirken als Beruhigungsräume bzw. als Labyrinthe, daß die Öldrücke weiter verringert werden.

Werden wie Anspruch 10 vorschlägt zwei O-Ringe hintereinander vorgesehen, so kann über die Entlastungsbohrungen Öl, welches die den Lagern näherliegenden O-Ringe passiert haben sollte, abgeleitet werden, so daß auf die als O-Ringe ausgebildeten Dichtungsvorrichtungen keine größeren Staudrücke ausgeübt werden können.

Die Erfindung wird anhand einer Zeichnung näher erläutert. Dabei zeigen:
- Figur 1: einen ausschnittsweise dargestellten Walzenbereich mit einem erfindungsgemäß profilierten Dichtring und einem Labyrinth als zweite Dichtung,
- Figur 2: einen ausschnittsweise dargestellten Walzenbereich mit einem erfindungsgemäß profilierten Dichtring mit einer Entspannungs-Ringnut,
- Figur 3: einen ausschnittsweise dargestellten Walzenbereich mit einem erfindungsgemäß profilierten Dichtring sowie zwei O-Ringen und einer Entlastungsbohrung und
- Figur 4: einen ausschnittsweise dargestellten Walzenbereich, bei dem der profilierte Dichtring auf der Walzenballen-Stirnfläche aufgeschrumpft ist.

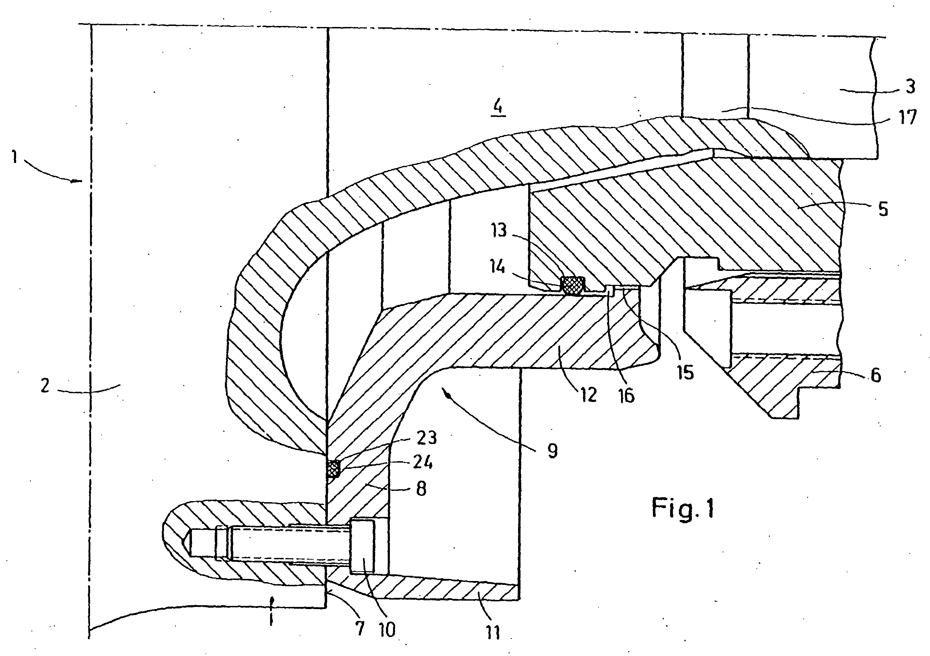

Figur 1 zeigt einen Ausschnitt einer Walze 1. Zu erkennen ist der Walzenballen 2, der Walzenzapfen 3, sowie der sog. Spannungsbereich 4 der Walze 1. Auf dem Walzenzapfen 3 ist die Zapfenbuchse 5 angeordnet, welche mit der Lagerbuchse 6 das Lager bildet. An der Stirnfläche 7 des Walzenballens 2 ist ein Schenkel 8 eines profilierten Dichtringes 9 mittels Schrauben 10 festgelegt. Am freien Ende des Schenkels 8 ist eine zylinderförmige Versteifungszunge 11 vorgesehen, die Verwindungen des Schenkels 8 entgegenwirkt.

Der Schenkel 12 des profilierten Dichtringes 9 übergreift die Zapfenbuchse 5. In die Zapfenbuchse 5 ist eine Ringnut 13 eingelassen, welche einen O-Ring 14 aufnimmt. Der O-Ring 14 dichtet den profilierten Dichtring 9 gegenüber der Zapfenbuchse 5 elastisch ab. Damit das aus den Lagern 5, 6 austretende Öl den O-Ring 14 nicht mit vollem Druck beaufschlagt, ist zwischen dem Schenkel 12 und der Zapfenbuchse 5 ein möglichst kleiner Spalt 15 vorgesehen, der die Wirkung einer Drossel hat. Der Spalt 15 erweitert sich zu einem Entspannungsraum, der die Form eines Labyrinth 16 aufweist. Dieses Labyrinth 16 bewirkt zusammen mit dem Spalt 15, daß der an den O-Ring 14 anstehende Öldruck minimal wird.

Zwischen dem Spannungsbereich 4 und dem Walzenzapfen 3 der Walze 1 ist eine umlaufende Nute 17 vorgesehen, welche verhindern soll, daß sich bei relativen Biegungen des Spannungsbereiches 4 gegenüber der Zapfenbuchse 5 diese gegen den Spannungsbereich 4 stößt und durch diese Beanspruchung die Pitting-Bildung vorantreibt.

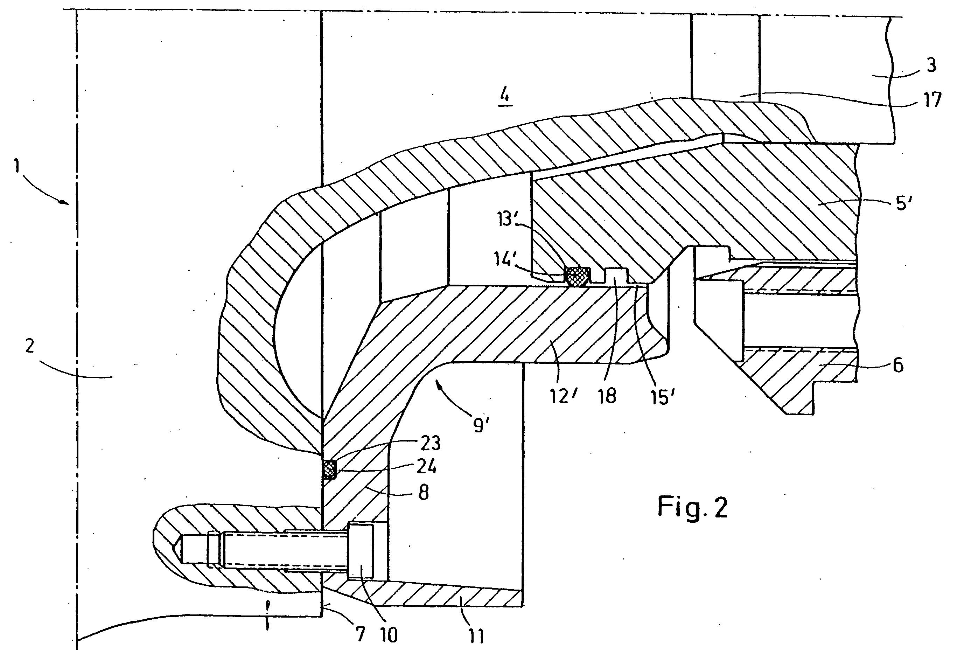

Figur 2 zeigt einen ähnlichen Walzenausschnitt wie Figur 1, hier weist die Zapfenbuchse 5' jedoch neben der Ringnut 13' noch eine zweite Ringnut 18 auf. Auch hier wirkt der Spalt 15' zwischen der Zapfenbuchse 5' und dem Schenkel 12' als Drossel, während die Ringnut 18 als Entspannungsraum dient, so daß auch hier der O-Ring 14' nur von Lecköl mit niedrigem Druck beaufschlagt werden kann.

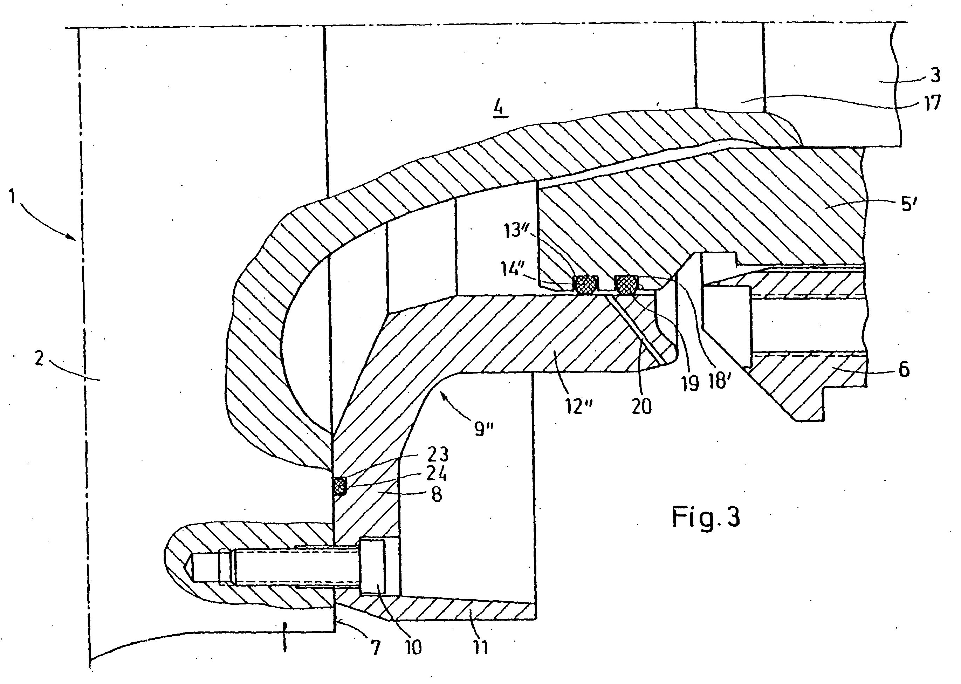

Figur 3 zeigt ähnlich wie in Figur 2 zwei Ringnute 13'', 18' in die O-Ringe 14'', 19 eingelegt sind. Sollte Öl zwischen dem O-Ring 19 und dem Schenkel 12'' bis zum O-Ring 14'' gelangen, so kann dieses Lecköl über eine Entlastungsbohrung 20 abgeleitet werden. Damit wird der O-Ring 14'', wenn überhaupt, nur mit Öl niedrigen Drucks beaufschlagt.

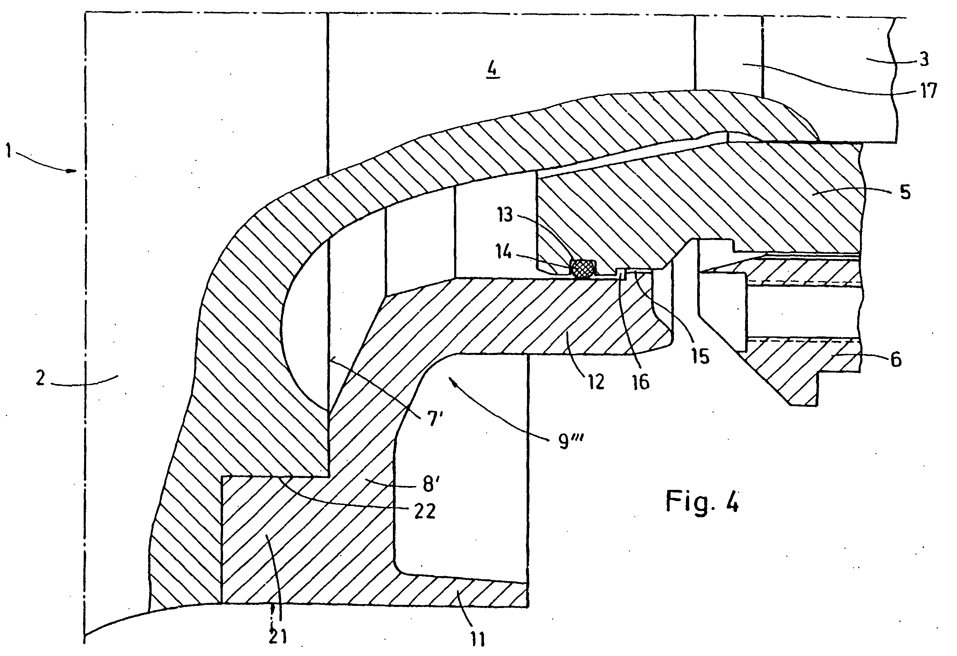

Figur 4 zeigt, daß die Walzenballen-Stirnfläche 7' vorspringt und einen Stirnflächenabschnitt 22 ausbildet, welcher im wesentlichen parallel zur Walzenachse verläuft. Der profilierte Dichtring 9''' weist einen Ansatz 21 auf, welcher auf den Stirnflächenabschnitt 22 aufgeschrumpft ist. Damit werden die aus den Fig. 1 bis 3 gezeigten Schraubverbindungen eingespart und dennoch eine sowohl für die Walzemulsion als auch für das Lageröl dichte Verbindung zwischen der Stirnfläche der Walzenballen und dem profilierten Dichtring erreicht.

Der profilierte Dichtring 9''' nach Fig. 4 kann selbstverständlich im Bereich seines zweiten Schenkels 12, 12', 12'' Dichtungsvorrichtungen aufweisen, wie sie in den Fig. 1 bis 3 gezeigt sind.

Das abgedichtete Lager nach den Fig. 1 bis 3 kann zusätzlich zu den Schraubverbindungen noch eine umlaufende Nut 23 aufweisen, in die gegebenenfalls Dichtungselemente 24 untergebracht sind, um so noch eine größere Dichtwirkung zu erzeugen.

Die Fig. 1 bis 4 zeigen Ölfilmlager, die mit den erfindungsgemäßen Abdichtungsvorrichtungen versehen sind. Der Einsatz der erfindungsgemäßen Abdichtungsvorrichtungen ist jedoch nicht auf Ölfilmlager beschränkt. Es können durchaus andere Lagertypen, wie z.B. Wälzlager, mit den entsprechenden Abdichtungsvorrichtungen versehen sein.

### Bezugszeichenübersicht

- 1: Walze
- 2: Walzenballen
- 3: Walzenzapfen
- 4: Spannungsbereich
- 5: Zapfenbuchse
- 6: Lagerbuchse
- 7: Stirnfläche
- 8: Schenkel
- 9: profilierter Dichtring
- 10: Schrauben
- 11: Versteifungszungen
- 12: Schenkel
- 13: Ringnut
- 14: O-Ring
- 15: Spalt
- 16: Labyrinth
- 17: Nut
- 18: Ringnut
- 19: O-Ring
- 20: Entlastungsbohrung
- 21: Ansatz
- 22: Stirnflächenabschnitt
- 23: Nute
- 24: Dichtelement

## Patentansprüche

1. Walze (1) mit Lagerabdichtungen, auf deren Walzenzapfen (3) Zapfenbuchsen (5,5') hoher Festigkeit vorzugsweise aufgeschrumpft sind und bei der Schenkel (8, 8') profilierter Dichtringe (9, 9', 9'', 9''') die den Walzenballen-Stirnflächen (7, 7') zugewandten Endabschnitte der Zapfenbuchsen (5, 5') sowie mindestens Bereiche der Walzenballen-Stirnflächen (7, 7') dichtend übergreifen,
**dadurch gekennzeichnet,**
**daß** die die Walzenballen-Stirnflächen (7, 7') übergreifenden Schenkel (8, 8') der profilierten Dichtringe (9, 9', 9'', 9''') mit den Stirnflächen (7, 7') der Walze (1) fest verbunden sind, und daß die die Endbereiche der Zapfenbuchsen (5, 5') übergreifenden Schenkel (12, 12', 12'') der profilierten Dichtringe (9, 9', 9'', 9''') diese unter Einhaltung von schmalen Spalten (15, 15') umschließen, die jeweils durch mindestens eine Dichtungsvorrichtung (14, 14', 14'') abgedichtet sind.

2. Walze mit Lagerabdichtungen nach Anspruch 1,
**dadurch gekennzeichnet,**
**daß** es sich bei den festen Verbindungen zwischen den Walzenballen-Stirnflächen (7) und den anliegenden Schenkeln (8) der profilierten Dichtringe (9, 9', 9'') um Schraubverbindungen (10) handelt.

3. Walze mit Lagerabdichtungen nach Anspruch 1,
**dadurch gekennzeichnet,**
**daß** es sich bei den festen Verbindungen zwischen den Walzenballen-Stirnflächen (7') und den anliegenden Schenkeln (8') der profilierten Dichtringe (9''') um Schrumpfverbindungen handelt.

4. Walze mit Lagerabdichtungen nach Anspruch 3,
**dadurch gekennzeichnet,**
**daß** Ansätze (21) der Schenkel (8') der profilierten Dichtringe (9''') auf im wesentlichen als achsparallel gerichtete Stirnflächenabschnitte (22) aufgeschrumpft sind.

5. Walze mit Lagerabdichtungen nach einem der Ansprüche 1 bis 4,
**dadurch gekennzeichnet,**
**daß** die Dichtungsvorrichtungen der zwischen den Zapfenbuchsen (5, 5') und den zweiten Schenkeln (12, 12', 12'') gebildeten Spalte (15, 15') als in den Zapfenbuchsen (5, 5') und/oder Schenkeln (12, 12', 12'') vorgesehenen Nute (13, 13', 13") ausgebildet sind.

6. Walze mit Lagerabdichtungen nach Anspruch 5,
**dadurch gekennzeichnet,**
**daß** die Dichtungsvorrichtungen der zwischen den Zapfenbuchsen (5, 5') und den zweiten Schenkeln (12, 12', 12'') gebildeten Spalte (15, 15') als in die Nute (13, 13', 13'') der Zapfenbuchsen (5, 5') und/oder Schenkel (12, 12', 12'') angeordnete Dichtungen vorzugsweise O-Ringe (14, 14', 14'') ausgebildet sind.

7. Walze mit Lagerabdichtungen nach einem der Ansprüche 1 bis 6,
**dadurch gekennzeichnet,**
**daß** den Dichtungsvorrichtungen (13, 13', 13''; 14, 14', 14'') jeweils mindestens weitere Dichtungsvorrichtungen (15, 16, 18, 19) vorgeordnet sind.

8. Walze mit Lagerabdichtungen nach Anspruch 7,
**dadurch gekennzeichnet,**
**daß** die weiteren Dichtvorrichtungen aus umlaufenden Nuten (18) in den Zapfenbuchsen (5') und/oder den zweiten Schenkeln (12') der profilierten Dichtringe (9') bestehen.

9. Walze mit Lagerabdichtungen nach Anspruch 7 oder 8,
**dadurch gekennzeichnet,**
**daß** die weiteren Dichtungsvorrichtungen als durch Absetzung der Spalte (15) ausgebildete Labyrinthe (16) ausgeführt sind.

10. Walze mit Lagerabdichtungen nach einem der Ansprüche 1 bis 9,
**dadurch gekennzeichnet,**
**daß** zwei mit O-Ringen (14', 19) versehene umlaufende Nute (13'', 18') in den Zapfenbuchsen (5') oder zweiten Schenkeln (12'') der profilierten Dichtringe (9'') in axialer Richtung hintereinander vorgesehen sind.

11. Walze mit Lagerabdichtungen nach Anspruch 10,
**dadurch gekennzeichnet,**
**daß** in den zweiten Schenkeln (12'') der profilierten Dichtringe (9'') Entlastungsbohrungen (20) vorgesehen sind, welche die Bereiche zwischen den beiden Dichtungsvorrichtungen (14'', 19) zu entlasten vermögen.

12. Walze mit Lagerabdichtungen nach einem der Ansprüche 1 bis 11,
**dadurch gekennzeichnet,**
**daß** an den Enden der mit den Walzenballen (2) verbundenen Schenkeln (8, 8') im wesentlichen konzentrisch zu den zweiten Schenkeln (12, 12', 12'') verlaufende zylinderförmige Versteifungszungen (11) vorgesehen sind.

13. Walze mit Lagerabdichtungen nach einem der Ansprüche 1 bis 12,
**dadurch gekennzeichnet,**
**daß** in den Stirnflächen (7, 7') der Walzen (1) und/oder den Schenkeln (8, 8') der profilierten Dichtringe (9, 9', 9'', 9''') Nute (23) vorgesehen sind.

14. Walze mit Lagerabdichtungen nach Anspruch 13,
**dadurch gekennzeichnet,**
**daß** in den Nuten (23) Dichtelemente (24) angeordnet sind.

## Claims

1. Roller (1) with bearing seals, on the roller pins (3) of which pin bushes (5, 5') of high strength are preferably shrink-fitted and in which limbs (8, 8') of profiled sealing rings (9, 9', 9", 9"') sealingly engage over the end portions, which face the roller circumference end faces (7, 7'), of the pin bushes (5, 5') as well as at least regions of the roller circumference end faces (7, 7'), **characterised in that** the limbs (8, 8'), which engage over the roller circumference end faces (7, 7'), of the profiled sealing rings (9, 9', 9", 9"') are fixedly connected with the end faces (7, 7') of the roller (1), and that the limbs (12, 12', 12"), which engage over the end regions of the pin bushes (5, 5'), of the profiled sealing rings (9, 9', 9", 9"') enclose these while maintaining narrow gaps (15, 15') which are each sealed by at least one sealing device (14, 14', 14").

2. Roller with bearing seals according to claim 1, **characterised in that** the fixed connections between the roller circumference end faces (7) and the contacting limbs (8) of the profiled sealing rings (9, 9', 9") are screw connections (10).

3. Roller with bearing seals according to claim 1, **characterised in that** the fixed connections between the roller circumference end faces (7') and the contacting limbs (8') of the profiled sealing rings (9"') are shrink-fitted connections.

4. Roller with bearing seals according to claim 3, **characterised in that** the projections (21) of the limbs (8') of the profiled sealing rings (9"') are shrink-fitted on end face portions (22) oriented to be substantially axially parallel.

5. Roller with bearing seals according to one of claims 1 to 4, **characterised in that** the sealing devices of the gaps (15, 15') formed between the pin bushes (5, 5') and the second limbs (12, 12', 12") are formed as grooves (13, 13', 13") provided in the pin bushes (5, 5') and/or limbs (12, 12',12").

6. Roller with bearing seals according to claim 5, **characterised in that** the sealing devices of the gaps (15, 15') formed between the pin bushes (5, 5') and the second limbs (12, 12', 12") are formed as seals, preferably O-rings (14, 14', 14"), arranged in the grooves (13, 13', 13") of the pin bushes (5, 5') and/or limbs (12, 12', 12").

7. Roller with bearing seals according to one of claims 1 to 6, **characterised in that** at least further sealing devices (15, 16, 18, 19) are arranged each time in front of the sealing devices (13, 13', 13"; 14, 14', 14").

8. Roller with bearing seals according to claim 7, **characterised in that** the further sealing devices consist of encircling grooves (18) in the pin bushes (5') and/or the second limbs (12') of the profiled sealing rings (9').

9. Roller with bearing seals according to claim 7 or 8, **characterised in that** the further sealing devices are executed as labyrinths (16) formed by offsetting of the gaps (15).

10. Roller with bearing seals according to one of claims 1 to 9, **characterised in that** two encircling grooves (13", 18') provided with O-rings (14', 19) are provided one behind the other in axial direction in the pin bushes (5') or second limbs (12") of the profiled sealing rings (9").

11. Roller with bearing seals according to claim 10, **characterised in that** relief bores (20) which enable the regions between the two sealing devices (14", 19) to be relieved, are provided in the second limbs (12") of the profiled sealing rings (9").

12. Roller with bearing seals according one of claims 1 to 11, **characterised in that** cylindrical stiffening tongues (11) extending substantially concentrically with the second limbs (12, 12', 12") are provided at the ends of the limbs (8, 8') connected with the roller circumferences (2).

13. Roller with bearing seals according to one of claims 1 to 12, **characterised in that** grooves (23) are provided in the end faces (7, 7') of the rollers (1) and/or the limbs (8, 8') of the profiled sealing rings (9, 9', 9", 9"').

14. Roller with bearing seals according to claims 13, **characterised in that** sealing elements (24) are arranged in the grooves (23).

## Revendications

1. Cylindre (1) avec des joints de palier dont les tourillons de cylindre (3) sont de préférence emmanchés par des coussinets de tourillons (5, 5') de plus grande résistance et où des montants (8, 8') de joints annulaires d'étanchéité profilés (9, 9', 9", 9"') agrippent de manière étanche les sections d'extrémité faisant face aux faces de la table de cylindre (7, 7') des coussinets de tourillon (5, 5') ainsi qu'au moins des zones des faces de la table de cylindre (7, 7'), **caractérisé en ce que** les montants (8, 8') des joints annulaires d'étanchéité profilés (9, 9', 9", 9"') agrippant les faces de la table de cylindre (7, 7') sont reliés de manière fixe avec les faces du cylindre (1) et **en ce que** les montants (12, 12', 12") des joints annulaires d'étanchéité profilés (9, 9', 9", 9"') agrippant les extrémités des coussinets de tourillon (5, 5') entourent celles-ci en maintenant des fentes étroites (15, 15'), qui sont à chaque fermées par au moins un dispositif d'étanchéité (14, 14', 14").

2. Cylindre présentant des joints de palier selon la revendication 1, **caractérisé en ce qu'**il s'agit, pour les liaisons fixes entre les faces (7) de la table du cylindre et les montants (8) des joints annulaires d'étanchéité profilés (9, 9', 9") placés contre celles-ci de liaisons vissées (10).

3. Cylindre présentant des joints de palier selon la revendication 1, **caractérisé en ce qu'**il s'agit, pour les liaisons fixes entre les faces (7) de la table du cylindre et les montants (8) des joints annulaires d'étanchéité profilés (9, 9', 9") placés contre celles-ci de liaisons emmanchées.

4. Cylindre présentant des joints de palier selon la revendication 3, **caractérisé en ce que** des bouts (21) des montants (8') du joint annulaire d'étanchéité profilé (9"') sont emmanchés essentiellement comme des sections de face (22) orientées de manière parallèle à l'axe.

5. Cylindre présentant des joints de palier selon l'une quelconque des revendications 1 à 4, **caractérisé en ce que** les dispositifs d'étanchéité des fentes (15, 15') formées entre les coussinets de tourillon (5, 5') et les deuxièmes montants (12, 12', 12") sont exécutés sous forme de rainures (13, 13', 13") prévues dans les tourillons de coussinet (5, 5') et/ou les montants (12, 12', 12").

6. Cylindre présentant des joints de palier selon la revendication 5, **caractérisé en ce que** les dispositifs d'étanchéité des fentes (15, 15') formées entre les coussinets de tourillon (5, 5') et les deuxièmes montants (12, 12', 12") sont exécutés sous forme de joints, de préférence des joints en O (14, 14', 14") disposés dans les rainures (13, 13', 13") disposées dans les tourillons de coussinet (5, 5') et/ou les montants (12, 12', 12").

7. Cylindre présentant des joints de palier selon l'une quelconque des revendications 1 à 6, **caractérisé en ce qu'**on dispose à chaque fois au moins d'autres dispositifs d'étanchéité (15, 16, 18, 19) avant les dispositifs d'étanchéité (13, 13', 13" ; 14, 14', 14").

8. Cylindre présentant des joints de palier selon la revendication 7, **caractérisé en ce que** les autres dispositifs d'étanchéité sont constitués de rainures périphériques (18) dans les coussinets de tourillon (5') et/ou les deuxièmes montants (12') des joints annulaires d'étanchéité profilés (9').

9. Cylindre présentant des joints de palier selon la revendication 7 ou 8, **caractérisé en ce que** les autres dispositifs d'étanchéité sont exécutés sous forme de labyrinthes (16) réalisés par décalage de la fente (15).

10. Cylindre présentant des joints de palier selon l'une quelconque des revendications 1 à 9, **caractérisé en ce que** deux rainures (13", 18') périphériques pourvues de joints en O (14', 19) sont prévues l'une derrière l'autre dans le sens axial dans les coussinets de tourillon (5') ou dans les deuxièmes montants (12") des joints annulaires d'étanchéité profilés (9").

11. Cylindre présentant des joints de palier selon la revendication 10, **caractérisé en ce que** des trous de décharge (20) sont prévus dans les deuxièmes montants (12") des joints annulaires d'étanchéité profilés (9"), qui permettent de décharger les zones entre les deux dispositifs d'étanchéité (14", 19).

12. Cylindre présentant des joints de palier selon l'une quelconque des revendications 1 à 11, **caractérisé en ce qu'**on a prévu aux extrémités des montants (8, 8') reliés à la table de cylindre (2) des languettes de renforcement (11) cylindriques s'étendant de manière essentiellement concentrique par rapport aux deuxièmes montants (12, 12', 12").

13. Cylindre présentant des joints de palier selon l'une quelconque des revendications 1 à 12, **caractérisé en ce qu'**on a prévu des rainures (23) dans les faces (7, 7') du cylindre (1) et/ou dans les montants (8, 8') des joints annulaires d'étanchéité (9, 9', 9", 9''').

14. Cylindre présentant des joints de palier selon la revendication 13, **caractérisé en ce que** des éléments d'étanchéité (24) sont disposés dans les rainures (23).
